# NEUE EUROPÄISCHE PATENTSCHRIFT

(11) **EP 2 280 191 B2**
(45) Veröffentlichungstag und Bekanntmachung des Hinweises auf die Entscheidung über den Einspruch: **15.03.2017**
(45) Hinweis auf die Patenterteilung: 26.06.2013
(21) Anmeldenummer: 10007020.0
(22) Anmeldetag: 07.07.2010
(51) Int. Cl.: F16H 35/10, F16D 9/08, F03D 80/00, E02F 9/12, B66D 1/58

(54) **Antriebseinheit mit Überlastschutz zum Antrieb eines Zahnkranzes, Set aus mehreren derartigen Antriebseinheiten sowie Vorrichtung enthaltend eine derartige Antriebseinheit**
Drive unit with overload protection for driving a crown gear, set comprising a plurality of such drive units and device comprising such a drive unit
Unité d'entraînement dotée d'une protection contre les surcharges pour l'entraînement d'une couronne dentée, set comprenant plusieurs telles unités et dispositif comprenant une telle unité

(30) Priorität: 29.07.2009 DE 102009035197
(43) Veröffentlichungstag der Anmeldung: 02.02.2011
(73) Patentinhaber: Liebherr-Components Biberach GmbH, 88400 Biberach/Riß (DE)
(72) Erfinder: Hausladen, Norbert, Dipl.-Ing., 88400 Biberach a.d. Riß (DE); Sedlmaier, Matthias, Dipl.-Ing., 88441 Mittelbiberach (DE)
(74) Vertreter: Laufhütte, Dieter

(56) Entgegenhaltungen:
- EP-A2- 1 635 057
- EP-A2- 1 775 465
- CH-A- 284 877
- DE-A1- 19 500 078
- DE-A1- 19 754 260
- DE-A1-102006 035 712
- DE-B- 1 067 694
- DE-C1- 19 941 630
- JP-A- 2004 232 500
- US-A- 3 038 576
- W. BEITZ ET AL.: 'DUBBEL Taschenbuch für den Maschinenbau', Bd. 20, 2001, SPRINGER-VERLAG, BERLIN HEIDELBERG - NEW YORK Seiten G76-G79 - G160-G161 - T20-T23
- T.S. Anderson u.a.: "Mod-0A 200 KW Wind turbine Generator Design and Analysis Report"; August 1980
- D. MUHS ET AL.: 'Roloff/Matek Maschinenelemente', Bd. 18, 2007, VIEWEG & SOHN VERLAG, WIESBADEN Seiten VI - 446-447
- Auszug aus dem Fachbericht VDI Bericht 1786 von 2003 Seiten 503 bis 525. Insbesondere Seite 509
- D. MUHS ET AL.: 'Roloff/Matek Maschinenelemente', Bd. 18, 2007, VIEWEG & SOHN VERLAG, WIESBADEN Seiten VI - 367
- Boeing Engineering & Construction Company "Mod-2 Wind turbine system concept andpreliminary design report" July 1979

## Beschreibung

Die vorliegende Erfindung betrifft eine Vorrichtung mit einem Zahnkranz und mindestens einer Antriebseinheit zum Antreiben oder Abbremsen des Zahnkranzes gemäß Anspruch 1.

Vorrichtungen, welche Antriebseinheiten zum Antrieb eines Zahnkranzes aufweisen werden beispielsweise zum Antrieb von Dreh- oder Schwenkwerken eingesetzt, insbesondere zum Antrieb eines Drehwerks einer Windkraftanlage oder zum Antrieb eines Dreh- oder Schwenkwerkes eines Kranes oder eines Baggers. Der Zahnkranz weist dabei auf seinem Außenumfang oder Innenumfang Zähne auf, welche mit den Zähnen des Ritzels kämmen. Durch Antrieb des Ritzels über die Abtriebswelle kann so der Zahnkranz angetrieben werden. Zahnkränze kommen auch zum Antrieb von Winden, insbesondere zum Antrieb von Winden eines Kranes zum Einsatz.

Zum Antrieb eines Zahnkranzes können auch mehrere Antriebseinheiten parallel eingesetzt werden, wenn große Antriebskräfte benötigt werden.

Für solche Antriebseinheiten sind bereits Überlastschutzvorrichtungen z. B. in Form von Rutschkupplungen oder Sollbruchstellen bekannt, welche zwischen dem Motor und dem Getriebe angeordnet sind. Hierdurch wird der vom Antriebsmotor in Richtung Abtriebswelle laufende Drehmomentfluß begrenzt, bzw. der Drehmomentfluß vom Getriebe zurück zum Motor.

Die gattungsbildende Druckschrift JP 2004/232500 A offenbart ein Maschinenhaus und eine Antriebseinrichtung zum Antreiben des frei drehbaren Maschinenhauses in etwa einer horizontalen Ebene mittels eines Untersetzungsgetriebes. Eine Kupplung und eine Bremse sind zwischen der Antriebsvorrichtung und dem Untersetzungsgetriebe oder in dem Untersetzungsgetriebe angeordnet. Diese Vorrichtung weist einen mechanischen Überlastschutz auf. Die Überlastsicherung ist dabei zwischen dem Motor und dem Getriebe angeordnet.

Aus der Druckschrift DE 197 54 260 A1 ist eine Antriebseinheit bekannt, die eine Überlastkupplung aufweist, die einen Teil eines Getrieberades und damit einen Teil des Getriebes bildet.

Ein optimaler Überlastschutz lässt sich mit bekannten Antriebseinheiten jedoch nicht garantieren.

Aufgabe der vorliegenden Erfindung ist es daher, eine Vorrichtung der eingangs genannten Art derart weiterzubilden, dass eine Antriebseinheit zum Antrieb eines Zahnkranzes mit einem verbesserten Überlastschutz zur Verfügung gestellt wird.

Diese Aufgabe wird erfindungsgemäß durch eine Vorrichtung mit den Merkmalen des Anspruchs 1 gelöst. Die erfindungsgemäße Vorrichtung mit einem Zahnkranz und mindestens einer Antriebseinheit zum Antrieb des Zahnkranzes ist derart ausgebildet, dass die Antriebseinheit einen Motor, ein Getriebe und eine Antriebswelle, an welcher ein Ritzel zum Antrieb des Zahnkranzes angeordnet ist, aufweist. Die Antriebseinheit weist erfindungsgemäß einen mechanischen Überlastschutz auf, welcher derart zwischen dem Getriebe und dem Ritzel angeordnet ist, dass bei einer Getriebeblockade der Überlastschutz dafür sorgt, dass bei einem Drehmomentfluß vom Zahnkranz auf das Ritzel Zähne des Zahnkranzes vor Zahngewaltbruch geschützt werden.

Durch die erfindungsgemäße Anordnung des Überlastschutzes zwischen dem Getriebe und dem Ritzel kann ein Drehmomentfluß von der Abtriebswelle zum Antriebsmotor auch dann noch überwacht werden, wenn eine Getriebeblockade vorliegt. Der erfindungsgemäße Überlastschutz ermöglicht so einen Schutz der Zähne des Zahnkranzes bzw. des Ritzels vor einem Zahngewaltbruch im Falle des Versagens des Getriebes. Der Überlastschutz liegt dabei hinter allen Getriebebauteilen, so dass bei einer Getriebeblockade der Überlastschutz dafür sorgt, dass bei einem Drehmomentfluß vom Zahnkranz auf das Ritzel die Zähne vor Zahngewaltbruch geschützt werden. Bekannte Antriebseinheiten können einen solchen Schutz der Zähne des Zahnkranzes nicht bieten, so dass durch Zahnbruchschäden enorme Kapitalschäden entstehen können.

Der Überlastschutz ist dabei nach allen ausfallbehafteten Elementen des Getriebes wie z. B. Zahnrädern, Planetenbolzen oder Sicherungsringen angeordnet. Dies hat den weiteren Vorteil, dass die Getriebebauteile kleiner dimensioniert werden können, weil sie nicht mehr zum Totalschaden der Anlage führen können. Zudem kann die Qualitätssicherungsüberwachung an den vor dem Überlastschutz liegenden Bauteilen und bei den entsprechenden Montagevorgängen reduziert werden, weil diese nicht mehr zu einem Hauptschaden am Zahnkranz führen können.

Vorteilhafterweise ist der Überlastschutz dabei zwischen dem Getriebe und der Hauptlagerung der Abtriebswelle angeordnet. Hierdurch liegt der Überlastschutz an einer Stelle, an der nur eine Beanspruchungsart vorliegt. Insbesondere liegt dabei eine reine Torsionsbelastung vor, so dass Biegebeanspruchungen das Ergebnis nicht beeinflussen können. Hierdurch ist ein genau definierter Überlastschutz möglich. Zudem sorgt die Anordnung des Überlastschutzes zwischen dem Getriebe und der Hauptlagerung der Abtriebswelle dafür, dass auch bei einem Auslösen des Überlastschutzes die Abtriebswelle in der Lagerung gelagert bleibt und daher keine weiteren Bauteile beschädigen kann.

Erfindungsgemäß ist der Überlastschutz dabei als Sollbruchstelle ausgeführt. Eine solche Sollbruchstelle ermöglicht einen äußerst kostengünstigen Überlastschutz. Die Sollbruchstelle wird zwar bei Auslösen des Überlastschutzes zerstört. Der Kapitalschaden ist jedoch relativ gering, da der Zahnkranz selbst nicht beschädigt wird. Zudem muss die Antriebseinheit bei einer Blockade des Getriebes ohnehin ausgetauscht bzw. repariert werden.

Vorteilhafterweise handelt es sich bei dem Überlastschutz um eine Sollbruchstelle der Abtriebswelle. Dies ermöglicht eine ebenso platzsparende wie kostengünstige Realisierung des Überlastschutzes. Vorteilhafterweise ist die Sollbruchstelle dabei in der Abtriebswelle zwischen dem Getriebe und der Hauptlagerung der Abtriebswelle angeordnet.

Erfindungsgemäß ist die Sollbruchstelle durch eine Querschnittsverminderung einer Welle realisiert. Eine solche Querschnittsverminderung erlaubt eine einfache und kostengünstige Realisierung eines Überlastschutzes. Durch die erfindungsgemäße Anordnung des Überlastschutzes wird die Sollbruchstelle dabei nur in einer Art beansprucht, z. B. durch eine reine Torsionsbelastung, so dass dennoch eine definierte Überlastsicherung möglich ist.

Durch die erfindungsgemäße Anordnung des Überlastschutzes hat der Querschnitt dabei annähernd konstante Spannungen. Dabei ist das Widerstandsmoment an dem besagten verminderten Querschnitt frei wählbar und kann im Verhältnis von Fließbeginn zu Bruchbeginn einfach optimiert werden.

Vorteilhafterweise ist die Sollbruchstelle dabei durch eine Querschnittsverminderung der Abtriebswelle realisiert. Vorteilhafterweise ist die Querschnittsverminderung dabei zwischen dem letzten Getriebebauteil und der Hauptlagerung der Abtriebswelle angeordnet.

Vorteilhafterweise weist die Welle dabei im Bereich der Sollbruchstelle eine Einkerbung im Außenumfang auf. Durch eine solche Einkerbung lässt sich eine definierte Querschnittsverminderung realisieren. Ein gewünschter Kerbfaktor zur Erreichung einer notwendigen Dauerfestigkeit kann dabei durch Anbringen von Radien hergestellt werden.

Die Welle ist im Bereich der Sollbruchstelle hohl gebohrt. Ein Torsionsbruch an der Sollbruchstelle führt hierdurch nicht zu einem Aufspreizen der beiden Teile, weil der hohlgebohrte Querschnitt an der Sollbruchstelle bei einem Torsionsbruch durchplastifiziert.

Die Welle kann im Bereich der sowohl einsatzgehärtet als auch weich ausgeführt werden. Dabei muss nur sichergestellt werden, dass die Bruchsicherung der Überlastsicherung kleiner ist als die Bruchsicherheit des zu schützenden Zahnes.

Vorteilhafterweise ist jedoch die Welle zumindest im Bereich der Sollbruchstelle nicht oberflächengehärtet. Indem die Welle weich ausgeführt wird, wird eine einfachere Auslegung der Sollbruchstelle ermöglicht. Die fehlende Randschichthärte gestaltet dabei die Auslegung einfacher, da das Streuband der Materialfestigkeitswerte kleiner ist. Somit kann die Auslegung exakter auf ein gewisses Drehmoment eingestellt werden.

Alternativ zu einer Querschnittsverjüngung einer Welle kann die Sollbruchstelle auch durch Abscherbolzen realisiert werden.

Alternativ kann der Überlastschutz auch als Rutsch- oder Ausrückkupplung realisiert werden. Solche Ausführungen haben den Vorteil, dass die Bauteile des Antriebs wie die Abtriebswelle nicht zerstört werden. Allerdings sind solche Ausführungen auch erheblich teurer.

Vorteilhafterweise ist erfindungsgemäß die Überlastschwelle der Überlastsicherung, insbesondere die Bruchschwelle der Sollbruchstelle, geringer als die Bruchschwelle der Zähne des Ritzels und/oder der Zähne des Zahnkranzes. Hierdurch wird sichergestellt, dass die Überlastsicherung bei einer Blockade des Getriebes anspricht, bevor es zu einem Gewaltbruch der Zähne des Ritzels und/oder der Zähne des Zahnkranzes kommt.

Die erfindungsgemäße Vorrichtung ist derart ausgebildet, dass ein gemeinsames Gehäuse für das Getriebe, die Überlastsicherung und die Hauptlagerung der Abtriebswelle vorgesehen ist. Dabei sind sowohl das Getriebe als auch die Abtriebswelle an dem gemeinsamen Gehäuse gelagert. Die Überlastsicherung kann so in dem gemeinsamen Gehäuse zwischen dem Getriebe und der Hauptlagerung angeordnet werden.

Vorteilhafterweise ist das gemeinsame Gehäuse dabei öldicht ausgeführt. Das Gehäuse bleibt durch die erfindungsgemäße Anordnung der Überlastsicherung auch bei einer Auslösung der Überlastsicherung, insbesondere einem Bruch der Sollbruchstelle, öldicht, weil die Dichtung des Gehäuses von einem Auslösen der Überlastsicherung nicht beeinträchtigt werden. Insbesondere ist dabei eine Öldichtung im Bereich der Hauptlagerung der Abtriebswelle angeordnet.

Die vorliegende Erfindung umfasst weiterhin ein Set aus zwei oder mehr Antriebseinheiten, wie sie oben dargestellt wurden, zum gemeinsamen Antrieb eines Zahnkranzes. Die erfindungsgemäßen Überlastsicherungen sorgen dabei dafür, dass die Zähne des Zahnkranzes bei einer Blockade einer der Antriebseinheiten nicht durch die Kraft der anderen Antriebe oder äußere Lasten beschädigt werden. Beim Auftreten einer Überlast z.B. durch Blockade des Getriebes einer Antriebseinheit gibt die defekte Antriebseinheit den Zahnkranz nach Auslösen der Überlastsicherung zwar frei, jedoch ist noch eine weitere Antriebseinheit vorhanden, welche einen Antrieb des Zahnkranzes bzw. eine Sicherung gegen unkontrollierte Bewegungen ermöglicht.

Die vorliegende Erfindung umfasst weiterhin eine Vorrichtung mit einem Zahnkranz, welcher von mindestens einer erfindungsgemäßen Antriebseinheit angetrieben wird. Weiterhin umfasst die vorliegende Erfindung eine Vorrichtung mit einem Zahnkranz, welcher von mindestens zwei Antriebseinheiten, wie sie oben dargestellt wurden, angetrieben wird. Hierdurch ergeben sich die gleichen Vorteile, wie sie bereits oben dargestellt wurden.

Insbesondere kann der Zahnkranz dabei Teil eines Dreh- oder Schwenkwerkes sein, durch das eine Baugruppe der Vorrichtung gegenüber einer anderen Baugruppe gedreht bzw. geschwenkt werden. Insbesondere handelt es sich dabei um den Zahnkranz eines Drehwerkes einer Windkraftanlage, über welchen die Gondel oder das Blatt um eine vertikale Drehachse gedreht werden kann.

Weiterhin kann die vorliegende Erfindung bei einer Arbeitsvorrichtung, insbesondere einer mobile Arbeitsvorrichtung zum Einsatz kommen. Z. B. kann es sich um das Drehwerk eines Kranes oder Baggers handeln, über welches ein Turm oder ein Oberwagen gedreht werden kann.

Insbesondere kommt die vorliegende Erfindung dabei vorteilhafterweise bei solchen Dreh- oder Schwenkwerken zum Einsatz, die durch zwei oder mehr Antriebseinheiten angetrieben werden.

Ebenso kann der Zahnkranz dem Antrieb einer Winde dienen. Insbesondere bei Winden mit außen liegendem Zahnkranz, welche über eine oder mehrere Antriebseinheiten angetrieben werden, kann so der Zahnkranz vor Zahnbruch geschützt werden. Auch hier kommen die erfindungsgemäßen Antriebseinheiten vorteilhafterweise dann zum Einsatz, wenn zwei oder mehr Antriebseinheiten zusammen zum Antrieb eines Zahnkranzes eingesetzt werden.

Die vorliegende Erfindung wird nun anhand von Ausführungsbeispielen sowie Zeichnungen näher dargestellt. Dabei zeigen:
Figur 1: ein erstes Ausführungsbeispiel einer erfindungsgemäßen Vorrichtung mit einem Zahnkranz und mehreren erfindungsgemäßen Antriebseinheiten zum Antrieb des Zahnkranzes,
Figur 2: eine Schnittansicht durch ein erstes Ausführungsbeispiel einer erfindungsgemäßen Antriebseinheit,
Figur 3: eine Schnittansicht durch ein zweites Ausführungsbeispiel einer erfindungsgemäßen Antriebseinheit,
Figur 4: ein drittes Ausführungsbeispiel einer erfindungsgemäßen Antriebseinheit,
Figur 5: ein viertes Ausführungsbeispiel einer erfindungsgemäßen Antriebseinheit,
Figur 6: ein fünftes Ausführungsbeispiel einer erfindungsgemäßen Antriebseinheit,
Figur 7: ein sechstes Ausführungsbeispiel einer erfindungsgemäßen Antriebseinheit und
Figur 8: ein siebtes Ausführungsbeispiel einer erfindungsgemäßen Antriebseinheit.

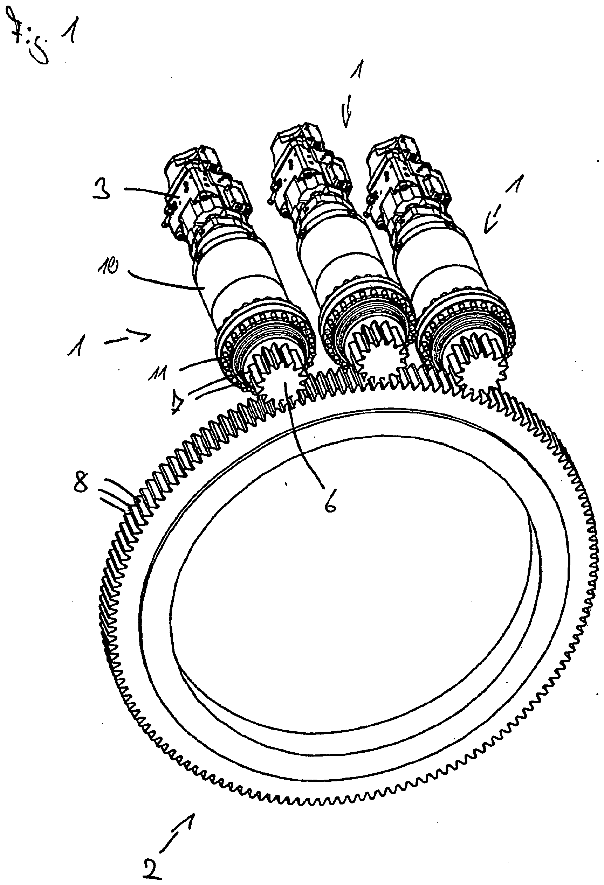

In Figur 1 ist ein Ausführungsbeispiel einer erfindungsgemäßen Vorrichtung gezeigt. Dabei sind mehrere erfindungsgemäße Antriebseinheiten 1 vorgesehen, welche einen Zahnkranz 2 gemeinsam antreiben. Jede der Antriebseinheiten 1 weist dabei einen Motor 3 auf, im Ausführungsbeispiel einen Hydraulikmotor. Alternativ könnten auch andere Motoren, insbesondere elektrische Motoren eingesetzt werden. Jede der Antriebseinheiten weist weiterhin ein Getriebe sowie eine Abtriebswelle auf, welche in dem gemeinsamen Gehäuse 10 gelagert sind. An der Abtriebswelle ist jeweils ein Ritzel 6 angeordnet, welches mit dem Zahnkranz 2 kämmt. Dabei stehen die Zähne 7 an den Ritzeln 6 mit den Zähnen 8 am Zahnkranz in Verbindung. Die Antriebseinheiten 1 können dabei über einen Montagflansch an der Vorrichtung montiert werden. Der Zahnkranz 2 ist ringförmig ausgestaltet und weist auf seiner Außenseite Zähne 8 auf. Der Zahnkranz kann auch eine Innenverzahnung aufweisen.

In dem in Figur 1 gezeigten Ausführungsbeispiel sind drei Antriebseinheiten für den Zahnkranz 2 vorgesehen. Alternativ könnte jedoch auch nur eine oder zwei Antriebseinheiten eingesetzt werden. Ebenso ist der Einsatz von mehr als drei Antriebseinheiten denkbar. So sind beispielsweise bei Windkraftanlagen Ausführungsformen bekannt, bei welchen acht und mehr Antriebseinheiten verwendet werden.

Bei der erfindungsgemäßen Vorrichtung kann es sich insbesondere um eine Windkraftanlage handeln, wobei der Zahnkranz 2 zum Drehen der Gondel um eine vertikale Drehachse dient. Ebenso kann der Zahnkranz 2 Teil eines Dreh- oder Schwenkwerks einer Arbeitsvorrichtung, insbesondere eines Kranes oder eines Baggers sein. Z. B. kann es sich dabei um den Drehkranz handeln, mit welchem der Oberwagen eines Kranes oder Baggers gegenüber einem Unterwagen gedreht werden kann. Ebenso kann es sich um den Drehkranz handeln, mit welchem ein Ausleger, ein Turm oder ein Oberwagen eines Kranes gegenüber einer Basis gedreht werden kann. Weiterhin kann der Zahnkranz 2 auch dem Antrieb einer Winde mit außen liegendem Antrieb dienen, insbesondere einer Seilwinde eines Kranes.

Bei solchen Vorrichtungen ist der Zahnkranz 2 sowohl in der Herstellung als auch in der Montage äußerst kostenintensiv, so dass Beschädigungen der Zähne 8 des Zahnkranzes zu hohen Kosten führen. Erfindungsgemäß sind die Antriebseinheiten 1 daher mit einer Überlastsicherung ausgestattet. Um die Zähne des Zahnkranzes 8 bei einer Blockade des Getriebes einer der Antriebseinheiten auch bei Drehmomentflüssen vom Zahnkranz 2 zur Antriebseinheit gegen Zahnbruch zu schützen, ist die Überlastsicherung dabei erfindungsgemäß zwischen dem Getriebe und dem Ritzel 6 angeordnet. Die Drehmomentfestigkeit der Überlastsicherung ist hierfür kleiner als die Drehmomentfestigkeit aller anderen Elemente im Kraftweg der Antriebseinheit und insbesondere kleiner ist als die Bruchsicherheit der zu schützenden Zähne 7 bzw. 8.

Bei einer Blockade des Getriebes und einer Überlast im Drehmomentfluß vom Zahnkranz 2 zur Antriebseinheit löst so die Überlastsicherung aus und schützt die Zähne des Zahnkranzes 8 vor Zahngewaltbruch. Solche Drehmomentflüsse vom Zahnkranz 2 zur Antriebseinheit können dabei insbesondere auftreten, wenn externe Kräfte, wie z. B. Windkräfte oder Lastkräfte auf den Zahnkranz wirken oder wenn bei mehreren Antriebseinheiten eines blockiert und die übrigen noch Drehmoment übertragen.

Insbesondere ist der Überlastschutz dabei nach allen ausfallbehafteten Elementen des Getriebes wie Zahnrädern, Planetenbolzen und Sicherungsringen angeordnet. So können die vor der Überlastsicherung liegenden Getriebebauteile kleiner dimensioniert werden, was zu einer Kosteneinsparung führt. Diese kleinere Dimensionierung der Getriebebauteile ist möglich, da deren Ausfall nicht mehr zu einem Totalschaden der Anlage führen kann. Zudem kann auch die Qualitätssicherungsüberwachung an den Getriebebauteilen bzw. an allen vor dem Überlastschutz liegenden Bauteilen und bei den entsprechenden Montagevorgängen reduziert werden, da ein Ausfall in diesem Bereich nicht mehr zu einem Hauptschaden führen kann.

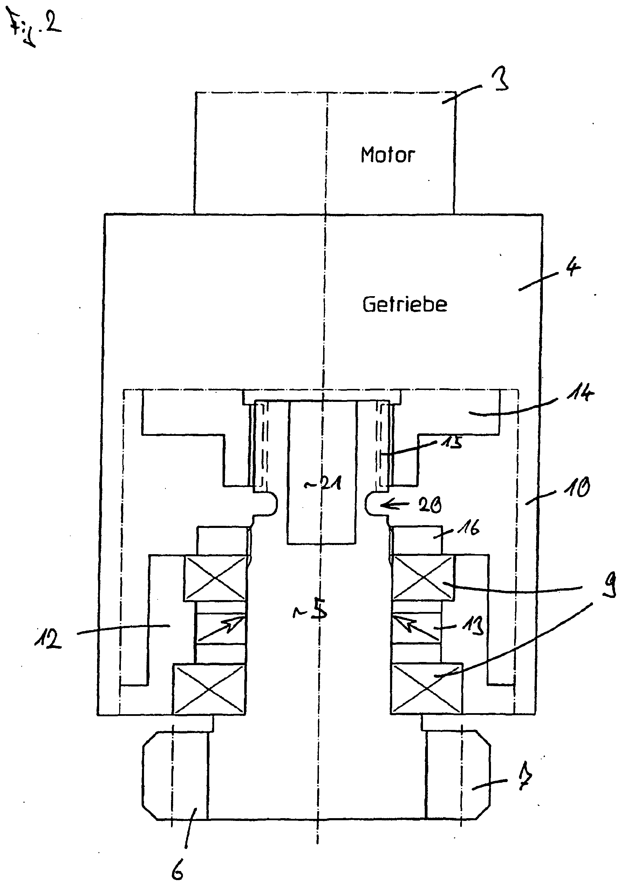

In Figuren 2 bis 8 sind nun unterschiedliche Ausführungsbeispiele der erfindungsgemäßen Antriebseinheit gezeigt. Alle Ausführungsbeispiele weisen einen Motor 3 auf, sowie ein Getriebe 4, welches vom Motor 3 angetrieben wird. Der Motor 3 und das Getriebe 4 sind dabei jeweils nur schematisch dargestellt. Das Getriebe 4 treibt wiederum eine Abtriebswelle 5 an, an welcher das Ritzel 6 angeordnet ist. Die Abtriebswelle 5 ist dabei in einer Hauptlagerung 9 gelagert, welche im Ausführungsbeispiel aus zwei Lagern, insbesondere aus zwei Kugel- oder Rollenlagern besteht. Die Überlastsicherung ist dabei zwischen dem letzten Getriebeelement 14 und der Hauptlagerung 9 der Abtriebswelle angeordnet.

Durch die Anordnung zwischen Getriebe und Hauptlagerung der Abtriebswelle liegt der Überlastschutz an einer Stelle, an der eine reine Torsionsbelastung vorliegt.

Hierdurch können Biegebeanspruchungen das Ergebnis nicht beeinflussen, so dass eine eindeutige Drehmomentgrenze eingestellt werden kann. Zudem bleibt das Getriebe trotz eines Ansprechens der Überlastsicherung öldicht, weil die Dichtung durch z. B. einen Bruch der Sollbruchstelle nicht beeinträchtigt wird.

Dabei weist das Getriebe 4 ein Gehäuse 10 auf, an welchem über die Hauptlagerung 9 auch die Abtriebswelle 5 gelagert ist. Hierfür sind Lagerelemente 12 vorgesehen, an welchen die Lager der Hauptlagerung 9 angeordnet sind. Die Überlastsicherung befindet sich damit zwischen Getriebe und Hauptlagerung 9 im Inneren des Gehäuses 10. Die Öldichtung 13 ist im Bereich der Hauptlagerung angeordnet, im Ausführungsbeispiel zwischen den beiden Lagern der Hauptlagerung.

In Figur 2 ist nun ein erstes Ausführungsbeispiel gezeigt, bei welchem die Überlastsicherung durch eine Sollbruchstelle 20 realisiert ist. Die Sollbruchstelle 20 ist dabei in die Abtriebswelle 5 integriert und zwischen dem Verbindungsbereich 15 mit dem letzten Getriebeelement 14 des Getriebes und einem Lagerbereich der Hauptlagerung 9 an der Abtriebswelle 5 angeordnet. Die Sollbruchstelle 20 ist dabei als Querschnittsverminderung der Abtriebswelle 5 realisiert. Hierzu ist am Außenumfang der Abtriebswelle 5 eine Einkerbung vorgesehen, durch welche ein verkleinerter Querschnitt der Abtriebswelle 5 definiert wird. Zudem weist die Abtriebswelle 5 im Bereich der Einkerbung 20 eine axial verlaufende Bohrung 21 auf.

Die Abtriebswelle 5 ist dabei weich ausgeführt, weil die fehlende Randschichthärte die Auslegung einfacher gestaltet und das Streuband der Materialfestigkeitswerte kleiner ist. Hierdurch kann die Auslegung exakt auf ein Drehmoment eingestellt werden. Alternativ wäre jedoch auch eine einsatzgehärtete Ausführung der Abtriebswelle 5 möglich. Es muss lediglich sichergestellt werden, dass die Bruchschwelle der Sollbruchstelle 20 kleiner ist als die Bruchsicherheit der zu schützenden Zähne 7 bzw. 8.

Der verminderte Querschnitt der Welle hat annähernde konstante Spannungen, so dass eine definierte Bruchschwelle problemlos eingestellt werden kann. Das Widerstandsmoment ist dabei frei wählbar und kann im Verhältnis von Fließbeginn zu Bruchbeginn einfach optimiert werden. Ein gewünschter Kerbfaktor zur Erreichung einer notwendigen Dauerfestigkeit kann dabei durch Anbringen von Radien hergestellt werden. Da die Welle im Bereich der Sollbruchstelle hohlgebohrt ist, führt ein möglicher Torsionsbruch nicht zu einem Aufspreizen der beiden Teile, da der Querschnitt durchplastifiziert.

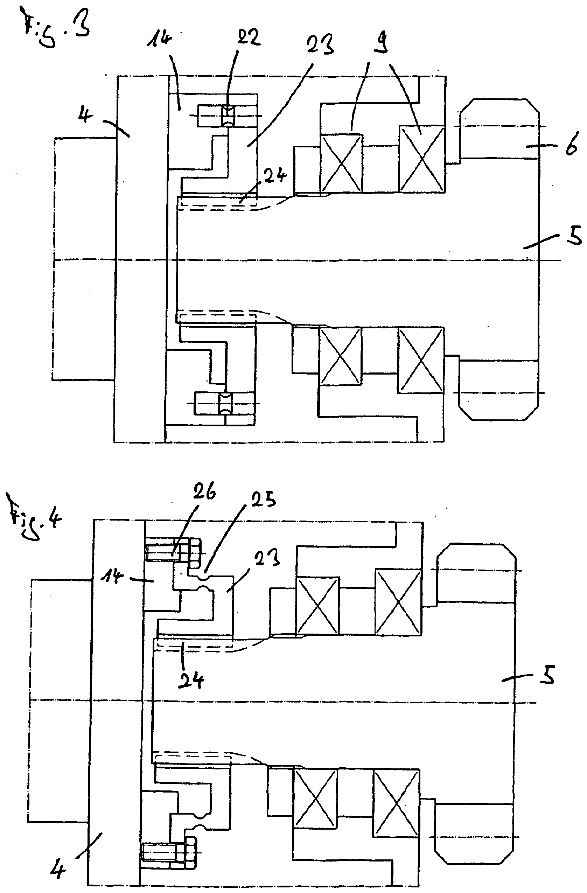

In Figuren 3 bis 8 sind weitere Ausführungsbeispiele eines erfindungsgemäßen Überlastschutzes gezeigt, welcher ebenfalls nach allen Getriebebauteilen und vor der Hauptlagerung der Abtriebswelle angeordnet ist und daher wie im ersten Ausführungsbeispiel den Zahnkranz bei einer Blockade des Getriebes sichert.

In Figur 3 ist eine Ausführung gezeigt, bei welcher die Überlastsicherung durch Scherbolzen realisiert wird. Die Scherbolzen 22 sind dabei zwischen dem letzten getriebeseitigen Element 14 und einem abtriebswellenseitigen Element 23 angeordnet, welches in einem Verbindungsbereich 24 mit der Abtriebswelle 5 drehfest verbunden ist. Die Scherbolzen weisen dabei definierte Sollbruchstellen 22 auf.

Bei der in Figur 4 gezeigten Ausführung ist die Sollbruchstelle 25 in das Verbindungselement 23 integriert, welches mit der Abtriebswelle 5 im Verbindungsbereich 24 drehfest verbunden ist. Die Sollbruchstelle 25 ist dabei als eine Querschnittsverminderung des Verbindungselements 23 ausgeführt. Das Verbindungselement 23 ist dabei über Verschraubungen 26 mit dem letzten getriebeseitigen Element 14 verbunden.

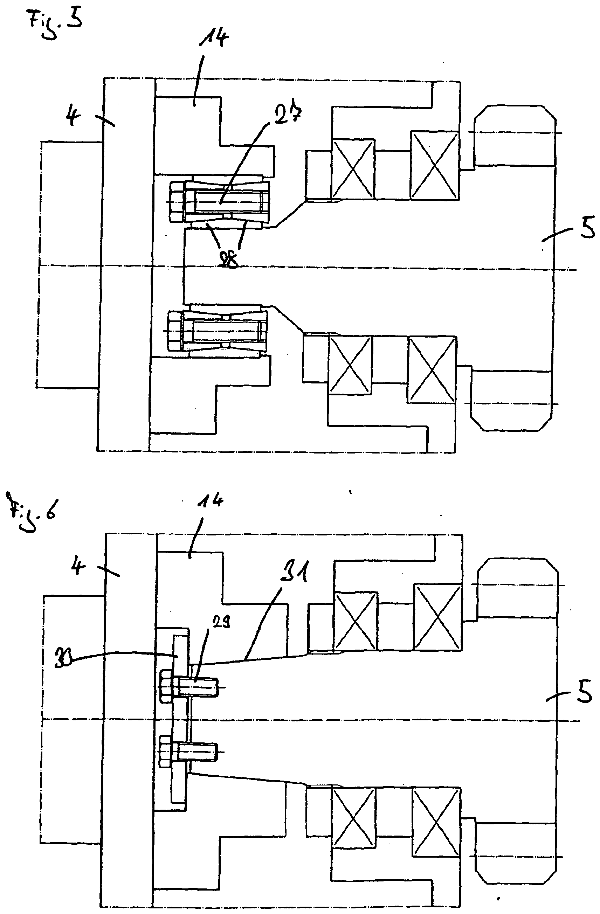

In Figuren 5 und 6 sind jeweils Ausführungsbeispiele mit Rutschkupplungen gezeigt, durch welche die Überlastsicherung realisiert wurde. Hierfür ist die Abtriebswelle 5 und das letzte getriebeseitige Element 14 über eine Klemmvorrichtung kraftschlüssig miteinander verbunden, wobei die Verbindung durch den Kraftschluss eine Belastungsgrenze aufweist, bei deren Überschreiten sich die Klemmvorrichtung löst.

Bei dem in Figur 5 gezeigten Ausführungsbeispiel ist eine Klemmschraube 27 vorgesehen, durch welche Klemmelemente mit konischem Querschnitt in eine entsprechende, zwischen der Abtriebswelle 5 und dem letzten getriebeseitigen Element 14 angeordnete Klemmnut 28 hineinpreßt werden. Die Klemmelemente sind dabei als Klemmringe ausgeführt, welche durch die Klemmschraube aufeinander zu bewegt werden.

Bei der in Figur 6 gezeigten Ausführungsform ist ein Verbindungsbereich 31 der Abtriebswelle als Konus ausgeführt, welcher in einen Gegenkonus am letzten getriebeseitigen Element 14 eingepreßt wird. Hierzu sind Schrauben 29 vorgesehen, welche am Kopf der Abtriebswelle 5 angreifen und eine Preßplatte 30 gegen eine entsprechende Preßfläche am letzten getriebeseitigen Element 14 pressen.

Bei den in Figuren 5 und 6 gezeigten Überlastschutz-Vorrichtungen erfolgt der Überlastschutz dadurch, dass die jeweiligen Preßsitze nur ein definiertes Drehmoment übertragen können und bei Überschreiten dieses Drehmoments Kupplungen bilden.

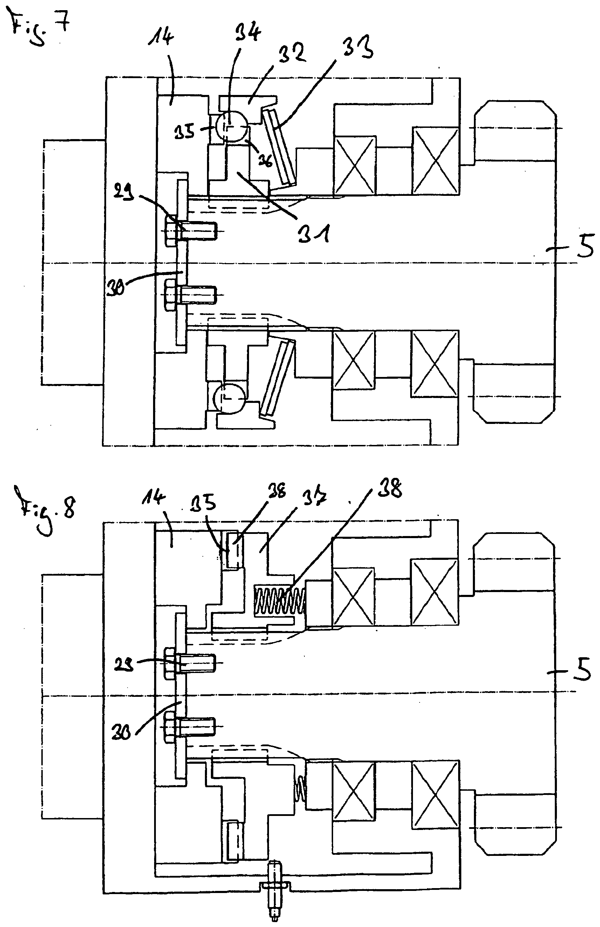

In Figuren 7 und 8 ist dagegen eine Ausrückkupplung als Überlastschutz eingesetzt. Die Ausrückkupplung ist bei dem in Figur 7 gezeigten Ausführungsbeispiel über eine Tellerfeder 33 realisiert, welche Kugeln 34 im eingekoppelten Zustand über einen verschiebbaren Druckring 32 so anordnet, dass die Kugeln 34 eine formschlüssige Verbindung zwischen dem letzten getriebeseitigen Element 14 und einem Verbindungselement 31, welches drehfest an der Abtriebswelle gelagert ist, herstellt. Die Kugeln 34 sind dabei in angekoppeltem Zustand in Ausnehmungen 35 bzw. 36 an dem letzten getriebeseitigen Element 14 bzw. an dem Verbindungselement 31 angeordnet.

Wird ein definiertes Drehmoment überschritten, so werden die Kugeln 34 gegen die Kraft der Tellerfedern 33 aus der Aufnahme 35 am letzten getriebeseitigen Element gedrückt, so dass die formschlüssige Verbindung gelöst wird. Dabei sind Schrauben 29 vorgesehen, welche über eine Platte 30 eine unverschiebliche Verbindung zwischen der Abtriebswelle 5 und dem letzten getriebeseitigen Element 14 in axialer Richtung herstellen.

Bei dem in Figur 8 dargestellten Ausführungsbeispiel wird die formschlüssige Verbindung zwischen dem letzten getriebeseitigen Element 14 und dem abtriebswellenseitigen Verbindungselement 37 dagegen dadurch hergestellt, dass Vorsprünge an dem einen Element in Aufnahmen und dem anderen Element eingreifen. Insbesondere kann dies durch entsprechend ineinander greifende Zähne 35 und 38 realisiert werden.

Das Verbindungselement 37 ist dabei wiederum drehfest mit der Abtriebswelle 5 gekoppelt, jedoch in Längsrichtung verschiebbar und wird über eine Feder 38 gegen das letzte getriebeseitige Element 14 gepresst. Bei überschreiten eines definierten Drehmoments wird das Verbindungselement dabei gegen die Kraft der Feder 38 von dem letzten getriebeseitigen Element 14 weggedrückt und gibt so die formschlüssige Verbindung frei.

Die vorliegende Erfindung ermöglicht durch die erfindungsgemäße Anordnung der Überlastsicherung zwischen dem Getriebe und der Hauptlagerung der Abtriebswelle einen zuverlässigen Schutz des von der Antriebseinheit angetriebenen Zahnrings, so dass größere Kapitalschäden bei einer Blockade des Getriebe vermieden werden können.

## Patentansprüche

1. Vorrichtung mit einem Zahnkranz (2) und mindestens einer Antriebseinheit (1) zum Antrieb des Zahnkranzes (2), wobei
die Antriebseinheit (1) einen Motor (3), ein Getriebe (4) und eine Antriebswelle, sowie ein Gehäuse (10), in welchem das Getriebe (4) und eine Abtriebswelle (5) gelagert sind, aufweist, wobei
an einem außerhalb des Gehäuses (10) befindlichen Abschnitt der Abtriebswelle (5) ein Ritzel (6) zum Antrieb des Zahnkranzes (2) angeordnet ist, und wobei
die Antriebseinheit (1) einen mechanischen Überlastschutz aufweist, **dadurch gekennzeichnet, dass**
der Überlastschutz derart zwischen dem Getriebe (4) und dem Ritzel (6) angeordnet ist, dass bei einer Getriebeblockade der Überlastschutz dafür sorgt, dass bei einem Drehmomentfluß vom Zahnkranz (2) auf das Ritzel (6) Zähne (8) des Zahnkranzes (2) vor Zahngewaltbruch geschützt werden,
der Überlastschutz als Sollbruchstelle (20) ausgeführt ist, die durch eine Querschnittsverminderung einer Welle realisiert ist, und
die Welle im Bereich der Sollbruchstelle (20) hohl gebohrt ist.

2. Vorrichtung nach Anspruch 1, **dadurch gekennzeichnet, dass** der Überlastschutz zwischen dem Getriebe (4) und einer Hauptlagerung (9) der Abtriebswelle (5) angeordnet ist.

3. Vorrichtung nach Anspruch 1 oder 2, **dadurch gekennzeichnet, dass** die Sollbruchstelle (20) als Sollbruchstelle der Abtriebswelle (5) ausgeführt ist.

4. Vorrichtung nach Anspruch 1, **dadurch gekennzeichnet, dass** die Welle im Bereich der Sollbruchstelle (20) eine Einkerbung im Außenumfang aufweist.

5. Vorrichtung nach einem der Ansprüche 1, 3 oder 4, **dadurch gekennzeichnet, dass** die Welle zumindest im Bereich der Sollbruchstelle (20) nicht oberflächengehärtet ist.

6. Vorrichtung nach Anspruch 1, **dadurch gekennzeichnet, dass** die Sollbruchstelle durch Abscherbolzen (22) realisiert ist.

7. Vorrichtung nach Anspruch 1 oder 2, **dadurch gekennzeichnet, dass** der Überlastschutz als Rutsch- oder Ausrückkupplung realisiert ist.

8. Vorrichtung nach einem der vorangegangenen Ansprüche, **dadurch gekennzeichnet, dass** die Überlastschwelle der Überlastsicherung, insbesondere die Bruchschwelle der Sollbruchstelle, geringer ist als die Bruchschwelle der Zähne des Ritzels.

9. Vorrichtung nach einem der vorangegangenen Ansprüche, **dadurch gekennzeichnet, dass** das Gehäuse (10) ein gemeinsames Gehäuse für das Getriebe (4), die Überlastsicherung und die Hauptlagerung (9) der Abtriebswelle und insbesondere ein öldichtes Gehäuse ist.

10. Vorrichtung nach einem der vorhergehenden Ansprüche, **dadurch gekennzeichnet, dass** der Zahnkranz von mindestens zwei Antriebseinheiten (1) angetrieben wird.

11. Dreh- oder Schwenkwerk mit einer Vorrichtung nach einem der Ansprüche 1 bis 10, insbesondere Drehwerk einer Windkraftanlage oder Dreh- oder Schwenkwerk einer Arbeitsvorrichtung, insbesondere eines Kranes oder Baggers.

12. Winde mit einer Vorrichtung nach einem der Ansprüche 1 bis 10, **dadurch gekennzeichnet, dass** der Zahnkranz (2) zum Antrieb der Winde dient.

## Claims

1. An apparatus comprising a ring gear (2) und at least one drive unit (1) for driving the ring gear (2),
wherein the drive unit (1) includes a motor (3), a transmission (4) and a drive shaft as well as a housing (10) in which the transmission (4) and a drive shaft (5) are supported,
wherein a pinion (6) for driving a ring gear (2) is arranged on a portion of the drive shaft (5) located outside the housing (10), and
wherein the drive unit (1) has a mechanical overload protection,
**characterized in that**
the overload protection is arranged between the transmission (4) and the pinion (6) such that in the case of a blockage of the transmission the overload protection ensures that in the case of a torque flow from the ring gear (2) to the pinion (6) the teeth (8) of the ring gear (2) are protected against tooth overload fracture; the overload protection is configured as a predetermined breaking point (20) which is realized by a reduction in crosssection of a shaft; and the shaft is drilled hollow in the region of the predetermined breaking point (20).

2. The apparatus according to claim 1, wherein the overload protection is arranged between the transmission (4) and a main bearing (9) of the output shaft (5).

3. The apparatus according to claim 1 or 2, wherein the predetermined breaking point (20) is configured as a predetermined breaking point of the output shaft (5).

4. The apparatus according to claim 1, wherein the shaft includes a notch in the outer circumference in the region of the predetermined breaking point (20).

5. The apparatus according to any of claims 1, 3 or 4, wherein the shaft is not surface-hardened at least in the region of the predetermined breaking point (20).

6. The apparatus according to claim 1, wherein the predetermined breaking point is realized by shear pins (22).

7. The apparatus according to claim 1 or 2, wherein the overload protection is realized as a slip or disengaging clutch.

8. The apparatus according to any of the preceding claims, wherein the overload threshold of the overload protection, in particular the fracture threshold of the predetermined breaking point, is smaller than the fracture threshold of the teeth of the pinion.

9. The apparatus according to any of the preceding claims, wherein the housing (10) is a common housing for the transmission (4), the overload protection and the main bearing (9) of the output shaft and is in particular an oil-tight housing.

10. The apparatus according to any one of the preceding claims, wherein the ring gear is driven by at least two drive units (1).

11. A slewing or swing gear comprising an apparatus according to any of claims 1 to 10, in particular a slewing gear of a wind turbine or a slewing or swing gear of a working machine, in particular of a crane or excavator.

12. A winch comprising an apparatus according to any of claims 1 to 10, wherein the ring gear (2) serves for driving the winch.

## Revendications

1. Dispositif comprenant une couronne dentée (2) et au moins une unité d'entraînement (1) pour l'entraînement de la couronne dentée (2),
l'unité d'entraînement (1) comportant un moteur (3), un mécanisme de transmission (4) et un arbre d'entraînement, ainsi qu'un boîtier (10), dans lequel le mécanisme de transmission (4) et un arbre de sortie (5) sont logés,
un pignon (6) pour l'entraînement de la roue dentée (2) étant disposé sur une partie de l'arbre de sortie (5) située hors du boîtier (10), et
l'unité d'entraînement (1) comportant une protection mécanique contre les surcharges,
**caractérisé en ce que**
la protection contre les surcharges est disposée entre le mécanisme de transmission (4) et le pignon (6) de telle manière qu'en cas de blocage du mécanisme de transmission, la protection contre les surcharges fait en sorte que des dents (8) de la couronne dentée (2) soient protégées d'une rupture brutale de dent lors d'un flux de couple allant de la couronne dentée (2) au pignon (6),
la protection contre les surcharges se présente sous la forme d'un point destiné à la rupture (20) qui est réalisé par une diminution de la section transversale d'un arbre, et
l'arbre est évidé dans la zone du point destiné à la rupture (20).

2. Dispositif selon la revendication 1, **caractérisé en ce que** la protection contre les surcharges est disposée entre le mécanisme de transmission (4) et un palier principal (9) de l'arbre de sortie (5).

3. Dispositif selon la revendication 1 ou 2, **caractérisé en ce que** le point destiné à la rupture (20) se présente sous la forme d'un point destiné à la rupture de l'arbre de sortie (5).

4. Dispositif selon la revendication 1, **caractérisé en ce que** l'arbre comporte une entaille dans la périphérie extérieure dans la zone du point destiné à la rupture (20).

5. Dispositif selon l'une des revendications 1, 3 ou 4, **caractérisé en ce que**, au moins dans la zone du point destiné à la rupture (20), l'arbre n'est pas trempé en surface.

6. Dispositif selon la revendication 1, **caractérisé en ce que** le point destiné à la rupture est réalisé au moyen de goupilles de cisaillement (22).

7. Dispositif selon la revendication 1 ou 2, **caractérisé en ce que** la protection contre les surcharges est réalisé en tant qu'accouplement à friction ou accouplement débrayable.

8. Dispositif selon l'une des revendications précédentes, **caractérisé en ce que** le seuil de surcharge de la protection contre les surcharges, en particulier le seuil de rupture du point destiné à la rupture, est inférieur au seuil de rupture des dents du pignon.

9. Dispositif selon l'une des revendications précédentes, **caractérisé en ce que** le boîtier (10) est un boîtier commun pour le mécanisme de transmission (4), la protection contre les surcharges et le palier principal (9) de l'arbre de sortie et est en particulier un boîtier étanche à l'huile.

10. Dispositif selon l'une des revendications précédentes, **caractérisé en ce que** la couronne dentée est entraînée par au moins deux unités d'entraînement (1).

11. Mécanisme de rotation ou de pivotement comprenant un dispositif selon l'une des revendications 1 à 10, en particulier mécanisme de rotation d'une éolienne ou mécanisme de rotation ou de pivotement d'un dispositif de travail, en particulier une grue ou un excavateur.

12. Treuil comprenant un dispositif selon l'une des revendications 1 à 10,
**caractérisé en ce que** la couronne dentée (2) sert à entraîner le treuil.
